# EUROPEAN PATENT APPLICATION

(11) **EP 4 718 740 A1**
(43) Date of publication of application: **01.04.2026**
(21) Application number: 25199603.9
(22) Date of filing: 02.09.2025
(51) Int. Cl.: H04B 7/0404, H04B 7/0426, H04B 7/0456

(54) **DYNAMIC ANTENNA PORT POWER COMPENSATION AND CONTROL**

(30) Priority: 25.09.2024 FI 20246153
(71) Applicant: Nokia Technologies Oy, 02610 Espoo (FI)
(72) Inventor: ROM, Christian, Aalborg (DK); VEJLGAARD, Benny, Gistrup (DK); SVENDSEN, Simon, Aalborg (DK)
(74) Representative: Nokia EPO representatives

(57) **Abstract**

A dynamic antenna port power compensation and control method is provided. A method for implementing a dynamic antenna port power compensation and control scheme may include determining a target antenna port power level and obtaining at least one antenna port coherence precoding vector for a plurality of antenna ports. The at least one antenna port coherence precoding vector may be based on the target antenna port power level. The method may also include transmitting, to a network entity, at least one antenna port coherence precoding vector, which may include a coherence capability across a plurality of antenna ports. The method may include receiving, from the network entity, at least one precoding configuration indicating a phase precoding vector associated with a transmission layer. The phase precoding vector associated with the transmission layer may be based on the at least one antenna port coherence precoding vector.

## Description

### TECHNICAL FIELD:

Some exemplary embodiments may generally relate to mobile or wireless telecommunication systems, such as Long Term Evolution (LTE) or fifth generation (5G) or sixth generation (6G) new radio (NR) access technology, or other communications systems. For example, certain exemplary embodiments may relate to implementing dynamic antenna port power compensation and control.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology, and/or sixth generation (6G) radio access technology. 5G and 6G wireless systems refer to the next generation (NG) of radio systems and network architecture. 5G and 6G network technology are mostly based on new radio (NR) technology, but the 5G (or NG) network can also build on E-UTRAN radio. It is estimated that NR may provide bitrates on the order of 10-20 Gbit/s or higher and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide an apparatus comprising at least one processor and at least one memory storing instructions that, when executed by the at least one processor, cause the apparatus at least to transmit, to a network entity, at least one antenna port coherence precoding vector. The at least one antenna port coherence precoding vector may comprise a coherence capability across a plurality of antenna ports. The apparatus may also be caused to receive, from the network entity, at least one precoding configuration indicating a phase precoding vector associated with a transmission layer. The phase precoding vector associated with the transmission layer may be based on the at least one antenna port coherence precoding vector.

Certain exemplary embodiments may provide an apparatus comprising at least one processor and at least one memory storing instructions that, when executed by the at least one processor, cause the apparatus at least to receive, from a user device, at least one antenna port coherence precoding vector comprising an indication of a coherence capability across a plurality of antenna ports. The apparatus may also be caused to transmit, to the user device, at least one precoding configuration indicating a phase precoding vector associated with a transmission layer. The phase precoding vector associated with the transmission layer may be determined based on the at least one antenna port coherence precoding vector.

Some exemplary embodiments may provide an apparatus comprising at least one processor and at least one memory storing instructions that, when executed by the at least one processor, cause the apparatus at least to receive, from a user device, at least one antenna port power imbalance vector and determine a coherence capability across a plurality of antenna ports based on the at least one antenna port power imbalance vector. The apparatus may also be caused to transmit, to the user device, at least one precoding configuration indicating a phase precoding vector associated with a transmission layer. The phase precoding vector associated with the transmission layer may be determined based on the coherence capability across the plurality of antenna ports.

Various exemplary embodiments may provide an apparatus comprising at least one processor and at least one memory storing instructions that, when executed by the at least one processor, cause the apparatus at least to transmit, to a network entity, at least one antenna port power imbalance vector for a plurality of antenna ports and receive, from the network entity, at least one precoding configuration indicating a phase precoding vector associated with a transmission layer for uplink transmissions.

Certain exemplary embodiments may provide an apparatus comprising at least one processor and at least one memory storing instructions that, when executed by the at least one processor, cause the apparatus at least to determine a target antenna port power level and obtain at least one antenna port coherence precoding vector for a plurality of antenna ports. The at least one antenna port coherence precoding vector may be based on the determined target antenna port power level. The apparatus may also be caused to transmit, to a network entity, at least one antenna port coherence precoding vector. The at least one antenna port coherence precoding vector may comprise a coherence capability across a plurality of antenna ports. The apparatus may further be caused to receive, from the network entity, at least one precoding configuration indicating a phase precoding vector associated with a transmission layer. The phase precoding vector associated with the transmission layer may be based on the at least one antenna port coherence precoding vector.

Various exemplary embodiments may provide a method comprising transmitting, to a network entity, at least one antenna port coherence precoding vector. The at least one antenna port coherence precoding vector may comprise a coherence capability across a plurality of antenna ports. The method may also comprise receiving, from the network entity, at least one precoding configuration indicating a phase precoding vector associated with a transmission layer. The phase precoding vector associated with the transmission layer may be based on the at least one antenna port coherence precoding vector.

Some exemplary embodiments may provide a method comprising receiving, from a user device, at least one antenna port coherence precoding vector comprising an indication of a coherence capability across a plurality of antenna ports. The method may also comprise transmitting, to the user device, at least one precoding configuration indicating a phase precoding vector associated with a transmission layer. The phase precoding vector associated with the transmission layer may be determined based on the at least one antenna port coherence precoding vector.

Certain exemplary embodiments may provide a method comprising receiving, from a user device, at least one antenna port power imbalance vector and determining a coherence capability across a plurality of antenna ports based on the at least one antenna port power imbalance. The method may also include transmitting, to the user device, the at least one precoding configuration indicating a phase precoding vector associated with a transmission layer. The phase precoding vector associated with the transmission layer may be determined based on the coherence capability across the plurality of antenna ports.

Some exemplary embodiments may provide a method comprising transmitting, to a network entity, at least one antenna port power imbalance vector for a plurality of antenna ports and receiving, from the network entity, at least one precoding configuration indicating a phase precoding vector associated with a transmission layer for uplink transmissions.

Various exemplary embodiments may provide a method comprising determining a target antenna port power level and obtaining at least one antenna port coherence precoding vector for a plurality of antenna ports. The at least one antenna port coherence precoding vector may be based on the determined target antenna port power level. The method may also include transmitting, to a network entity, at least one antenna port coherence precoding vector. The at least one antenna port coherence precoding vector may comprise a coherence capability across a plurality of antenna ports. The method may further include receiving, from the network entity, at least one precoding configuration indicating a phase precoding vector associated with a transmission layer. The phase precoding vector associated with the transmission layer may be based on the at least one antenna port coherence precoding vector.

Certain exemplary embodiments may provide a non-transitory computer-readable storage medium comprising computer-executable instructions that, when executed by an apparatus, cause the apparatus to perform any one or more of the methods described herein.

Some exemplary embodiments may provide one or more computer programs including instructions stored thereon for performing one or more of the methods described herein.

Certain exemplary embodiments may provide one or more apparatuses including one or more circuitry configured to perform one or more of the methods described herein.

Various exemplary embodiments may provide one or more apparatuses including one or more means configured for performing one or more of the methods described herein.

### BRIEF DESCRIPTION OF THE DRAWINGS:

For proper understanding of exemplary embodiments, reference should be made to the accompanying drawings, as follows:
FIG. 1 illustrates an example of a codebook-based uplink multiple input multiple output (MIMO) procedure;
FIG. 2 illustrates an example of directive radiation patterns with maximum gain in different angular directions;
FIG. 3 illustrates an example representation of antenna gains;
FIG. 4 illustrates an example of a signal diagram, according to various exemplary embodiments;
FIG. 5 illustrates an example of another signal diagram, according to certain exemplary embodiments;
FIG. 6 illustrates an example of a graphical representation of transmission power per antenna port, according to some exemplary embodiments;
FIG. 7 illustrates an example of a flow diagram of a method, according to some exemplary embodiments;
FIG. 8 illustrates an example of a flow diagram of another method, according to various exemplary embodiments;
FIG. 9 illustrates an example of a flow diagram of a further method, according to certain exemplary embodiments;
FIG. 10 illustrates an example of a flow diagram of an additional method, according to various exemplary embodiments;
FIG. 11 illustrates an example of a flow diagram of a method, according to some exemplary embodiments; and
FIG. 12 illustrates a set of apparatuses, according to various exemplary embodiments.

### DETAILED DESCRIPTION:

It will be readily understood that the components of certain exemplary embodiments, as generally described and illustrated in the figures herein, may be arranged and designed in a wide variety of different configurations. The following is a detailed description of some exemplary embodiments of systems, methods, apparatuses, and non-transitory computer program products for implementing dynamic antenna port power compensation and control. Although the devices discussed below and shown in the figures refer to 6G/5G or Next Generation NodeB (gNB) devices and UE devices, this disclosure is not limited to only gNBs and UEs.

It may be readily understood that the components of certain exemplary embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain exemplary embodiments, and not in limitation thereof.

In 5G/6G technology, multiple input multiple output (MIMO) systems may employ a variety of radio technologies depending on service needs, use cases and/or spectrum available. 5G/6G mobile communications may support a wide range of use cases and related applications including video streaming, augmented reality, different ways of data sharing and various forms of machine type applications. Key performance indicators may be desirable to be improved, such as the supported data rates, the number of served users, and the spectral efficiency. The number of users actively uploading data is quickly increasing, such as by uploading high-resolution photos, streaming videos, and/or participating in real-time interactive experiences. This surge in uplink traffic puts a strain on existing networks. An example of a MIMO system to handle increased uplink traffic may be referred to as uplink (UL) MIMO, which provides data transmission in the uplink direction, such as from a smartphone to the network, as contrasted with traditional MIMO which focuses on downlink transmissions. Uplink MIMO is deployed using codebook-based pre-coding for data transmissions.

Uplink MIMO may provide faster upload speeds or data rates by enabling users to upload data/content, such as videos and/or photos, more quickly, which reduces buffering. Uplink MIMO may allow more devices to transmit data within a short period of time, or even simultaneously. Uplink MIMO may therefore effectively expand the network's capacity to handle an increasing number of users and their data demands, which improves the efficiency and effectiveness of the network.

One of the challenges in uplink MIMO has been increasing the uplink speeds and capacity even further as the demands on the network increase. In recent years, user devices or equipment (UEs), such as smartphones, have begun including additional power amplifiers (PAs) to support more than one antenna transmitting data, such as, for example, at the same time and at the same frequency range. UEs may include a plurality of transmitter (Tx) antenna ports. For example, a UE may use 2, 3, or 4 simultaneous Tx antenna ports at the same frequencies to achieve up to four times the uplink throughput in ideal conditions, thus providing superior performance over UEs with only one active Tx (1Tx).

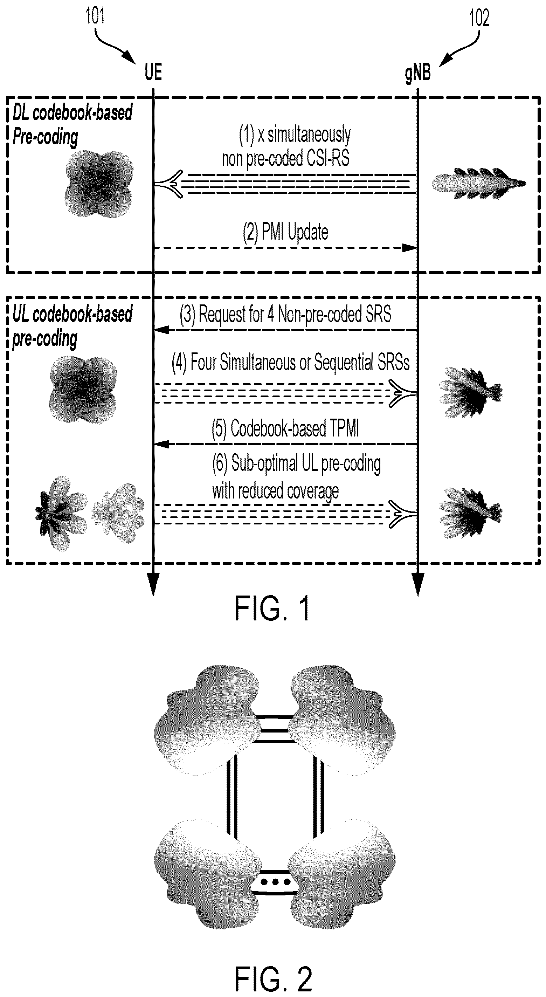

In conventional uplink MIMO, a network entity or base station, such as a gNB, may send a transmitted precoding matrix indicator (TPMI) to the UE to configure the UL precoding at the UE. FIG. 1 illustrates an example of a codebook-based uplink MIMO procedure. FIG. 1 illustrates a series of procedures for four antenna ports at both a UE 101 side and a gNB 102 side. In a first procedure (1), the gNB 102 may transmit orthogonal non-pre-coded channel state information reference signals (CSI-RSs), such as, for example, up to 32 orthogonal non-pre-coded CSI-RS (one from each virtual antenna port in 5G). A beam shape may be indicated by the UE 101, which may be the best CSI beam. The CSI-RSs may be sent either individually or in groups and may be sent sequentially or simultaneously. In a second procedure (2), the UE 101 may receive each of the non-pre-coded CSI-RSs on all receiver chains and may determine a best precoding matrix indicator (PMI) from a pre-defined codebook, which may be defined by, for example, 3GPP specifications. The selected PMI may then be transmitted to the gNB 102 via uplink control information (UCI).

In a third procedure (3) shown in FIG. 1, the gNB 102 may request the UE 101 to transmit a non-pre-coded sounding reference signal (SRS) from each UL antenna port (AP). In a fourth procedure (4), the UE 101 may transmit non-pre-coded SRS resources to the gNB 102. The SRS may be sent individually or in groups and sequentially or simultaneously, depending on the UE capabilities. However, transmitting SRSs simultaneously may reduce the power of each SRS in order to comply with the requirements for maximum combined Tx power at the UE 101 and thus may reduce the coverage. The gNB 102 may estimate the channel based on the received SRSs using pre-coded receive beams and may determine a best TPMI from the pre-defined codebook. In a fifth procedure (5), the gNB 102 may transmit a rank indicator and the TPMI to the UE 101. In a sixth procedure (6), the UE 101 may transmit the physical uplink shared channel (PUSCH) with obtained UL pre-coding. The UL pre-coding may be based on the received TPMI and may result in a non-optimum UE precoding. The used codebook may assume a uniform linear array (ULA) antenna array formed of, for example, isotropic cross-polarized antennas at the UE 101.

FIG. 2 illustrates an example of directive radiation patterns with maximum gain in different angular directions on a UE with, for example. monopole type antennas, which may be antennas typical for UE antenna implementation for frequency range 1 (FR1). For example, the UE may have antenna elements coupled to a chassis or structural body of the UE, which may act as a ground plane for the antenna elements. One of the challenges of the procedures implemented by the UE antennas shown in FIG. 2 may be that the UE relies on a low-resolution codebook specified by, for example, 3GPP. The codebook may assume ULA at the UE side with equal radiation patterns, which may lead to a discrete Fourier transform (DFT) based a grid of beams (GOB). However, as illustrated in FIG. 2, many UE antennas may not be uniform or linear, and individual antenna patterns may have directive variation of gain and phase. Individual antenna patterns may also have inter-antenna distances that may or may not be half a wavelength, e.g., distances can be up to 5 wavelengths for 9 GHz. This may result in a non-optimal codebook.

The radiation patterns shown in FIG. 2 may be obtained via electromagnetic simulations in free space conditions without any user interaction. By accounting for user interaction, such as a user holding a smartphone, the individual radiation patterns may be more directive and may have additional loss in one or more of the antennas, such as, for example, 5-15 dB loss. 3GPP specifications have also specified a non-codebook-based procedure which may allow for a solution that does not rely on the UE ULA assumption with isotropic radiation patterns per antenna element. The UE may determine a precoding by using DL CSI-RS reference signals. 3GPP specifications may support codebook based PUSCH MIMO transmission via a *MIMO-CB-PUSCH* capability parameter and/or partially coherent, fully coherent, or non-coherent codebooks reported via a capability *PUSCH-TransCoherence* parameter. This may define a coherence capability of antenna ports (APs) of the UE.

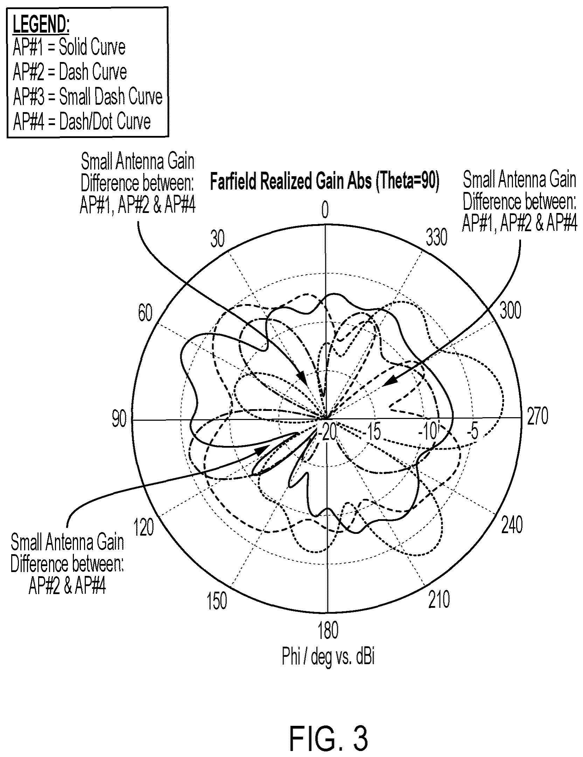

FIG. 3 illustrates an example representation of antenna gains in a direction of a radio channel multipath carrying one or more MIMO layers. A potential power imbalance for the UE may occur due to differences in the radiation patterns of the antennas of the UE for different angular directions of the MIMO layer signals. One or more of the MIMO layer signals may be present at any given time depending on the channel between the network (e.g., gNB) and the UE and channel conditions of the channel may change dynamically. For example, 6G specifications may change power control constraints of physical uplink control channel (PUCCH) and PUSCH transmissions requiring equal power per antenna port to enable a UE to compensate for the power imbalance to provide coherence across multiple selected antenna ports (APs) at the UE for UL MIMO. The UE may be able to, for example, autonomously perform data transmission with different power levels at each AP for UL MIMO PUSCH for one or more layers.

For purposes of this disclosure, coherence of antenna ports may be defined as the effective radiated power between two or more antennas having a similar strength, such as, for example, within 3-5 dB, which may be a prerequisite for a meaningful combining via 3GPP codebook. As discussed in more detail below, certain exemplary embodiments may provide power boosting per port in which the strength of a weaker antenna(s) may be evaluated to allow the power of weaker antenna(s) to be increased to have similar effective radiated power and be coherent. The gain for each antenna port which is similar may be considered to be coherent with each other.

Coherent signaling in transmissions from more than one AP may include that equivalent isotropic radiated power (EIRP) in the angular direction of the MIMO layer from each AP may be similar. If the difference in EIRP between two APs is more than a threshold amount, for example, more than 3-5 dB, in the angular direction of the MIMO layer, the benefit of combining them may be reduced unless the power delivered to the weakest AP is increased to achieve a similar EIRP between the APs. When per antenna port power compensation and/or control may be enabled in 5G and/or 6G, UEs may dynamically inform the network on the current coherency state of the antenna ports of the UE, which are coherent for each MIMO layer.

Various exemplary embodiments may provide technological advantages to address these above-mentioned concerns and implement one or more procedures for enhanced MIMO signaling and enhanced UL precoding methods that may enable a UE (e.g., smartphone) to perform optimized single or multi-layer codebook-based UL pre-coding considering non-uniform radiation patterns of antenna elements and non-uniform spacing properties of antenna elements in the UE. The non-uniformity properties of the antenna may increase as the frequency increases and may be considered for optimum MIMO performance, especially for 6G frequencies.

Various exemplary embodiments may provide that the UE uses 5G legacy codebook-based UL MIMO procedure or an evolution of it towards 6G, where the UE may be allowed to compensate and/or increase a power level of each AP for PUCCH and PUSCH to meet a set or desired power level to coherently transmit signals across the target UE AP for a given MIMO layer. One or more SRSs may be sent with substantially equal power enabling the gNB to use the same set of SRSs for DL and UL MIMO characterization. The equal power levels of the SRSs may decrease power consumption at the UE and may reduce the interference of the SRSs at neighboring gNBs.

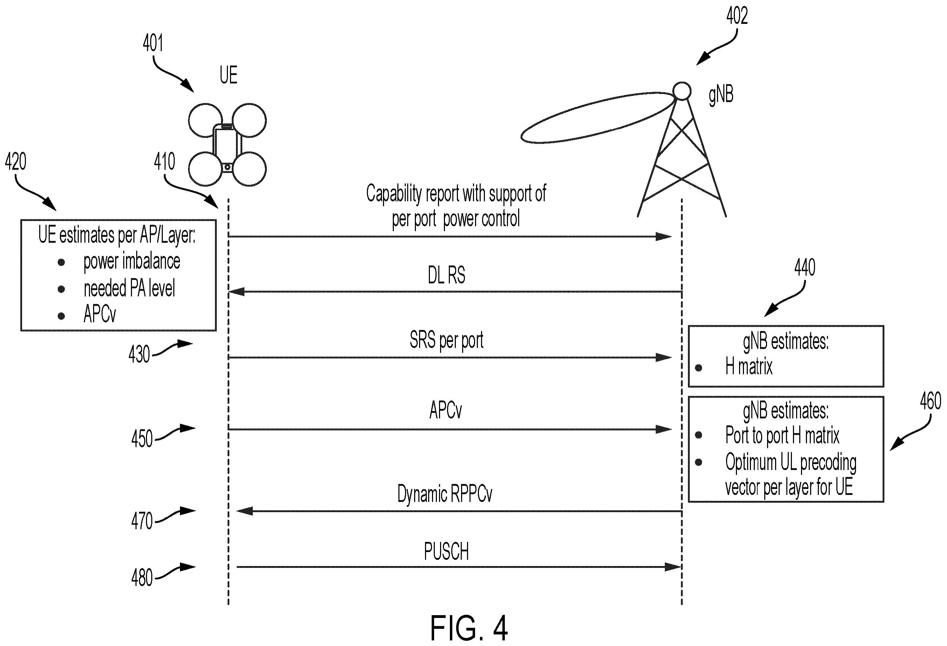

FIG. 4 illustrates an example of a signal diagram, according to certain exemplary embodiments. The signal diagram shows signaling between a UE 401 and a gNB 402. At 410, the UE 401, after establishing RRC connection, may transmit a capability report to the gNB 402. The capability report may be generated by the UE 401 and may indicate that the UE 401 supports per port power control for one or more of the antennas of the UE 401, which may define a coherence capability across APs of the UE 401. At 420, the UE 401 may receive DL reference signals from the gNB 402 and may estimate or determine a current power imbalance between the physical UL APs, which is the number of configurable antennas at the UE 401. The number of logical UL APs may be the number of PAs for a given frequency range (e.g., the number of possible MIMO layers). The number of physical APs may be the number of physical antennas to which a PA may be switched to. The number of physical APs may be higher than the number of logical APs. The DL reference signals may be legacy (e.g., conventional signaling used in 5G) CSI-RS or dedicated coherence reference signals, which may be beneficial to allow for a specific control of update rate and/or beam control. The UE 401 may determine a target AP power level (TAPPL) and then the UE 401 may obtain or generate an AP coherence vector (APCv) for each supported MIMO layer based on the DL reference signals and based on the determined target AP power level. The TAPPL may be based on power level imbalance according to the received downlink reference signals.

At 430, the UE 401 may transmit to the gNB 402 per port SRSs with the same power level per AP. At 440, the gNB 402 may estimate or determine a channel matrix H based on the per port SRSs and determine an optimal codebook entry based on the channel matrix H for the UE 401 to use during UL transmissions. At 450, the UE 401 may transmit an APCv for each support MIMO transmission layer. The APCv may indicate which APs for a specific MIMO layer can be power compensated/boosted so as to increase the power level of the AP. The APCv may be provided via UCI or other UL configuration signals.

At 460, the gNB 402 may estimate or determine an antenna port to port channel matrix H and may determine optimum UL precoding values for each MIMO layer. At 470, the gNB may transmit a dynamic relative phase pre-coding vector (RPPCv) for each supported MIMO layer based on the APCvs received from the UE 401 and the optimum UL precoding values. The RPPCv may be transmitted via DCI or other DL configuration signals. At 480, the UE 401 may perform UL transmissions by transmitting pre-coded UL PUCCH and PUSCH based on the received RPPCv from the gNB 402.

Certain exemplary embodiments may provide that the APCv may be defined as a 4-bit vector per MIMO layer. A coherence of each AP may be indicated by "0" for non-coherent or "1" for coherent. For example, a first bit may have a coherence status for a first AP (AP#1) as (0 = no coherence, 1 = coherence), a second bit may have the coherence status for a second AP (AP#2) as (0 = no coherence, 1 = coherence), a third bit may have the coherence status for a third AP (AP#3) as (0 = no coherence, 1 = coherence), and a fourth bit may have the coherence status for a fourth AP (AP#4) as (0 = no coherence, 1 = coherence). Using these four bits (AP#1 - AP#4), the UE may construct the APCv for each supported MIMO layer. The APCv may be reduced or extended to support any MIMO configuration, such as 2, 6, 8, 16 bits, etc.).

Some exemplary embodiments may provide that the dynamic RPPCv may be defined as a multi-bit vector, such as, for example, 2 bit to 6 bit vectors. Each bit may define a relative phase or phase shift relative to one AP, such as AP#1. For example, a first bit and a second bit may set a relative phase at a second AP (AP#2) relative to a first AP (AP#1) as (00 = 0°, 01 = 90°, 10 = 180°, 11 = 270°), a third bit and a fourth bit may set a relative phase at a third AP (AP#3) relative to AP#1 as (00 = 0°, 01 = 90°, 10 = 180°, 11 = 270°), and a fifth bit and sixth bit may set a relative phase at a fourth AP#4 relative to AP#1 as (00 = 0°, 01 = 90°,10 = 180°,11 = 270°). The second AP (AP#2) may be a second identified AP in APCv. Each RPPCv may be transmitted individually, or all may be combined into a matrix. Additional bits may be assigned for the RPPCv for higher granularity of the phase values. For example, 3-bits for a 45° granularity, 4-bits for a 22.5° granularity, etc.

Various exemplary embodiments may provide examples of the APCv and RPPCv in certain scenarios. For example, the UE may be determined to have sufficient power headroom on each AP and a relative difference in power imbalance between APs for each MIMO layer. The power headroom may be defined as the difference between the current power level of a power amplifier (PA) for an AP and a maximum power -level (PCmax) set for each AP. For an AP to have sufficient power headroom for power compensation, the power level of the AP is less than PCmax and the power level may be compensated and increased towards PCmax. For this example in which all APs (e.g., AP#1-AP#4) have sufficient power headroom for power compensation, the UE may construct an APCv as [1111] to indicate that all four APs have coherence with each other. The gNB may determine, based on the APCv and optimum UL precoding values, an RPPCv, such as a 6-bit RPPCv = [011110]. The 6-bit RPPCv may indicate relative phase pre-coding as follows: ([01xxxx] = AP#2 = 90°), ([xxl lxx] = AP#3 = 270°), and ([xxxx10] = AP#4 = 180°).

Certain exemplary embodiments may provide another example in which a UE has sufficient power headroom on each AP of a plurality of APs and one or more of the APs (and/or MIMO layers) have a larger power imbalance value than a power threshold, which may be set by the UE, the gNB, or by network specifications. The UE may determine that only a subset of the APs are coherent and may be used for per antenna port power control in transmissions. The remaining APs may be determined by the UE to be too power hungry e.g., requiring too much of an increase in power for power compensation to be coherent with one or more other APs. In this example, the UE may determine or construct an APCv of [0101] to indicate that, for example, AP#2 and AP#4 are coherent with each other, while AP#1 and AP#3 are not coherent due to the power imbalance being above the threshold. The gNB may then determine a 2-bit RPPCv of [01] to indicate the relative phase pre-coding values as [01] = AP#4 = 90°.

Some exemplary embodiments may provide a further example in which a UE may have insufficient power headroom on a subset of APs of a plurality of APs and the remaining APs of the plurality of APs have a power imbalance value that is below a set power threshold. The UE may determine or construct an APCv of [1011] to indicate that the subset of the APs, e.g., AP#1, AP#3 and AP#4, are coherent and power compensation may be implemented to increase the power level of the AP(s). The gNB may determine or derive a 4-bit RPPCv of [1100] to indicate the relative phase pre-coding values as [11xx] = AP#3 = 270° and [xx00] = AP#4 = 0°.

Various exemplary embodiments may provide an even further example in which a UE may have insufficient power headroom on all or a subset of APs of a plurality of APs and/or all or the remaining APs may have a larger power imbalance than a set threshold. The UE may determine that none of the APs are coherent and are not suitable for power compensation. The UE may then determine or construct an APCv of [0000] to indicate that none of the APs, e.g., AP#1 - AP#4 are not coherent. The gNB may not derive or transmit an RPPCv as no pre-coding is needed at the UE and the UE may then select an AP for each MIMO layer, which may be the AP with the highest power level below the threshold or the AP with the least amount of power while still having a sufficient amount of power for performing the desired transmission.

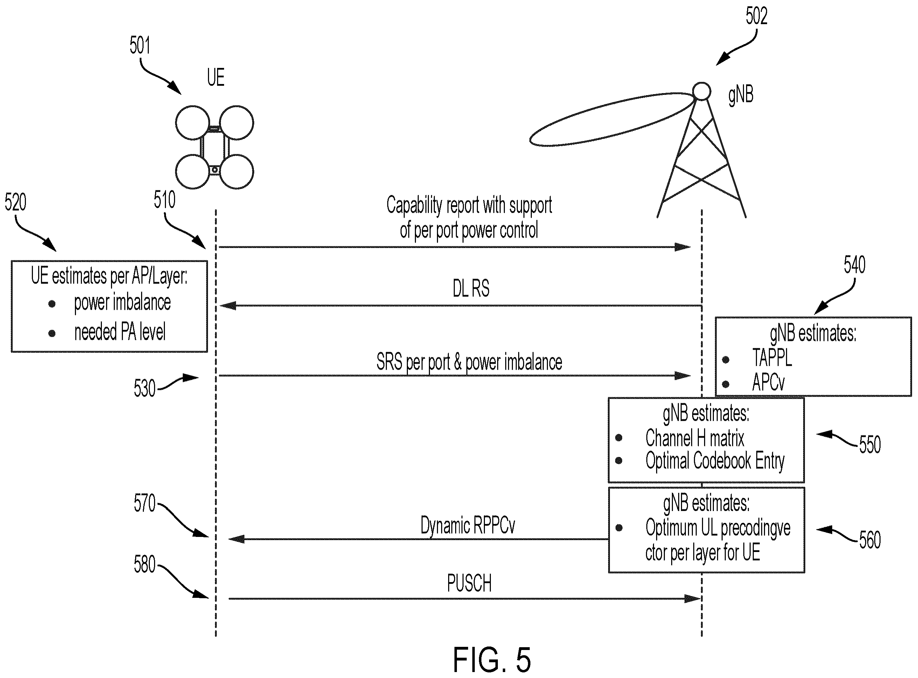

FIG. 5 illustrates an example of a signal diagram, according to certain exemplary embodiments. The signal diagram shows signaling between a UE 501 and a gNB 502. At 510, the UE 501, after establishing RRC connection, may transmit to the gNB 502 a capability report indicating that the UE 501 supports per port power control for one or more of the antennas of the UE 501, which may define the coherence capability across the APs of the UE 501. At 520, the UE 501 may receive DL reference signals from the gNB 502 and may estimate or determine a current power imbalance between the physical UL APs, which is the number of configurable antennas at the UE 501.

At 530, the UE 501 may transmit to the gNB 502 per port SRSs with the same power level per AP and may transmit the power imbalance between each of the APs determined by the UE 501. At 540, the gNB 502 may determine a target AP power level (TAPPL) and then an APCv for each supported MIMO layer based on the per port SRSs and the power imbalance for the APs of the UE 501. The APCv may indicate which APs for a specific MIMO layer can be power compensated/boosted. At 550, the gNB 502 may also estimate or determine a channel matrix H based on the per port SRSs and determine an optimal codebook entry based on the channel matrix H.

At 560, the gNB 502 may estimate or determine optimum UL precoding values for each MIMO layer based on the optimal codebook entry and the APCv for the UE 501 to use for UL pre-coding configurations for each MIMO layer. At 570, the gNB may determine and transmit a dynamic relative phase pre-coding vector (RPPCv) for each supported MIMO layer based on the APCv. The RPPCv may be transmitted via DCI or other DL configuration signals. At 580, the UE 501 may perform UL transmissions by transmitting pre-coded UL PUCCH and PUSCH based on the received RPPCv from the gNB 502.

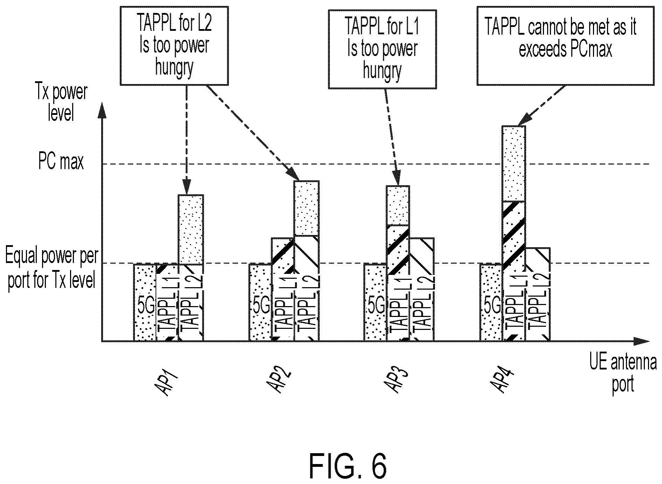

FIG. 6 illustrates an example of a graphical representation of transmission power per antenna port, according to certain exemplary embodiments. FIG. 6 illustrates an example of the power levels at a UE with four APs with different power control situations, including (1) 5G power control with all APs having the same power level, (2) the target AP power level (TAPPL) values for the four APs to enable the UE to transmit optimally for a first MIMO, and (3) TAPPL values for the four APs for a second MIMO layer.

Various exemplary embodiments may provide that for a given MIMO layer, the UE may estimate the UL power needed on each AP to transmit the layer coherently. For each AP, the UE may evaluate at least two parameters: amount of power headroom and amount of additional power needed for power compensation to increase a current power level of the AP to obtain coherency with one or more other APs. The evaluation of the amount of power headroom may determine whether the PA(s) connected to each antenna/AP have sufficient power headroom, which may be a power difference between a current power level and the maximum power threshold of PCmax, to transmit a given MIMO layer coherently to satisfy the TAPPL. When the UE determines that there is sufficient power headroom, the UE may determine whether the additional power compensation for the given AP may require more or less additional power consumption over each AP transmission than the PCmax.

In the example shown in FIG. 6, the TAPPL at AP#4 for the first MIMO layer may be determined to exceed PCmax for the PA connected to AP#4 and coherence for the first MIMO layer using AP#4 may not be possible. The TAPPLs at AP#1 and AP#2 for a second MIMO layer may be determined to be below PCmax and a required power compensation amount to achieve coherence may be determined to be higher than a threshold, such that coherence for the second MIMO layer may not be desired.

Certain exemplary embodiments may provide one or more procedures to be implemented by the UE or gNB to determine which AP can be power compensated and to determine or construct the APCv. In an example in which the one or more procedures are implemented by the UE, the UE may determine or identify one or more sub-optimal APs, which have lower power levels than one or more other APs) and may calculate a TAPPL for each of the sub-optimal APs for a given set of UL active antennas to obtain coherence. Coherence may be achieved by the APs having approximately equal gain, e.g., within 1-5dB across all configured APs. An APCv may be constructed for each AP and transformed into an APCv matrix, such that each MIMO layer has its own row providing its APCv. The UE may then determine whether the power available at the PA connected to each sub-optimal UE antenna port will support the TAPPLs to achieve coherence.

For example, the UE may determine that TAPPL compensation may be performed by determining that the amount of power increase required to compensate for coherence is available for each AP and the UE may indicate that TAPPL compensation may be performed with a binary indication, such as "1," in the APCv for that AP, or a binary indication, such as "0," in the APCv when TAPPL compensation may not be performed or may not be desired. The UE may determine that TAPPL compensation may be performed and determine that the power required for coherence is over a threshold value, and therefore the UE may not attempt to perform power compensation for that AP. The UE may determine that TAPPL compensation may not be performed as the required power level exceeds PCmax and the UE may be unable to perform power compensation for the AP. The one or more procedures performed by the UE or gNB may determine that the required increase in PA power level (TAPPL in dB) for each AP to obtain power balance/coherency and then may determine whether the AP can perform power compensation for coherence. Although the UE implemented these procedures for determination which AP may be power compensated, the gNB may alternatively perform these same procedures.

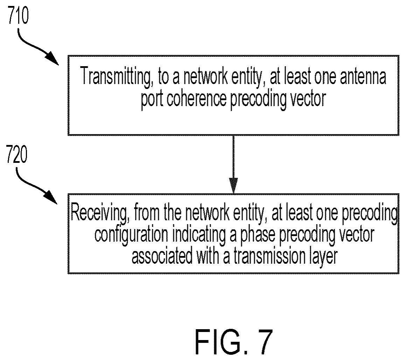

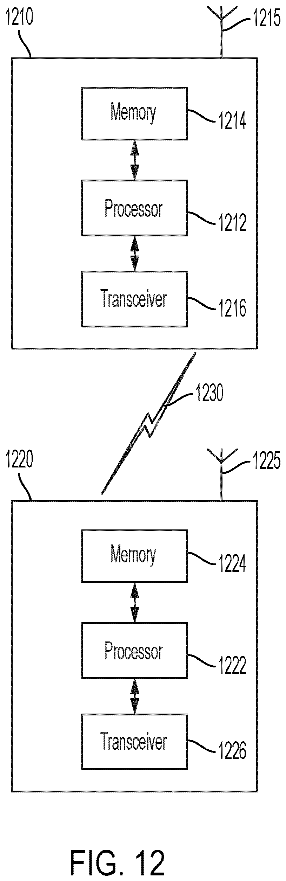

FIG. 7 illustrates an example flow diagram of a method, according to certain exemplary embodiments. In an example embodiment, the method of FIG. 7 may be performed by a user device in a 3GPP system, such as LTE, 5G-NR, or 6G. For instance, in an exemplary embodiment, the method of FIG. 7 may be performed by a user device or user equipment, such as a UE, similar to apparatus 1210 illustrated in FIG. 12.

According to various exemplary embodiments, the method of FIG. 7 may include, at 710, transmitting, to a network entity, at least one antenna port coherence precoding vector. The at least one antenna port coherence precoding vector may include a coherence capability across a plurality of antenna ports. At 720, the method may include receiving, from the network entity, at least one precoding configuration indicating a phase precoding vector associated with a transmission layer. The phase precoding vector associated with the transmission layer may be based on the at least one antenna port coherence precoding vector.

Certain exemplary embodiments may provide that the method further includes obtaining at least one antenna port coherence precoding vector for the plurality of antenna ports. The at least one antenna port coherence precoding vector may be associated with the transmission layer. The at least one antenna port coherence precoding vector may be based on at least a power level imbalance value. The antenna port coherence precoding vector may include an indication of the coherence capability for the plurality of antenna ports. The coherence capability across the plurality of antenna ports may be determined based on at least one of a power level imbalance between antenna ports associated with one transmission layer being lower than a threshold for coherence, or a power level compensation for coherence being below a threshold to obtain power balance.

Some exemplary embodiments may provide that the precoding configuration indicating the phase precoding vector comprises at least a relative phase value for at least one pair of antenna ports of the plurality of antenna ports. The at least one antenna port coherence precoding vector may be received as part of uplink control information, a medium access control element, or a radio resource control configuration message. The at least one precoding configuration may be received as part of downlink control information, a medium access control element, or a radio resource control configuration message. The transmission layer may comprise a plurality of transmission layers, and the plurality of transmission layers may be each associated with at least one antenna port coherence precoding vector.

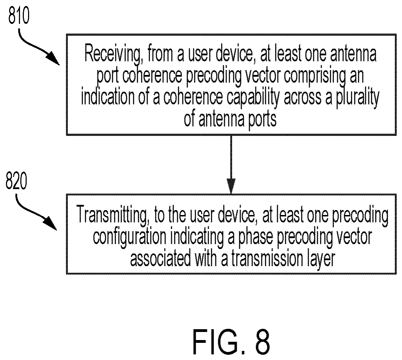

FIG. 8 illustrates an example flow diagram of a method, according to certain exemplary embodiments. In an example embodiment, the method of FIG. 8 may be performed by a network element/entity, or a group of multiple network entities in a 3GPP system, such as LTE, 5G-NR, or 6G. For instance, in an exemplary embodiment, the method of FIG. 8 may be performed by a network node or network entity, such as a gNB, similar to apparatus 1220 illustrated in FIG. 12.

According to various exemplary embodiments, the method of FIG. 8 may include, at 810, receiving, from a user device, at least one antenna port coherence precoding vector comprising an indication of a coherence capability across a plurality of antenna ports. At 820, the method may include transmitting, to the user device, at least one precoding configuration indicating a phase precoding vector associated with a transmission layer. The phase precoding vector associated with the transmission layer may be determined based on the at least one antenna port coherence precoding vector.

Certain exemplary embodiments may provide that the method further includes receiving an uplink transmission from the user device based on the at least one precoding configuration. The method may include transmitting, to the user device, at least one downlink reference signal for the plurality of antenna ports. The coherence capability may be determined at least based on the at least one downlink reference signal. The at least one antenna port coherence precoding vector may be based on at least a power level imbalance value.

Some exemplary embodiments may provide that the coherence capability across the plurality of antenna ports comprises at least one of a power level imbalance between antenna ports associated with one transmission layer being lower than a threshold for coherence, or a power level compensation for coherence being below a threshold to obtain power balance. The precoding configuration may comprise at least a relative phase value for at least one pair of antennas port of the plurality of antenna ports. The at least one antenna port coherence precoding vector may be received as part of uplink control information, a medium access control element, or a radio resource control configuration message. The at least one precoding configuration may be transmitted as part of downlink control information, a medium access control element, or a radio resource control configuration message.

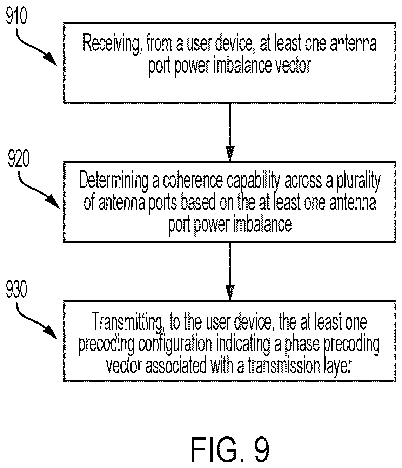

FIG. 9 illustrates an example flow diagram of a method, according to certain exemplary embodiments. In an example embodiment, the method of FIG. 9 may be performed by a network element/entity, or a group of multiple network entities in a 3GPP system, such as LTE, 5G-NR, or 6G. For instance, in an exemplary embodiment, the method of FIG. 9 may be performed by a network node or network entity, such as a gNB, similar to apparatus 1220 illustrated in FIG. 12.

According to various exemplary embodiments, the method of FIG. 9 may include, at 910, receiving, from a user device, at least one antenna port power imbalance vector. At 920, the method may include determining a coherence capability across a plurality of antenna ports based on the at least one antenna port power imbalance. At 930, the method may include transmitting, to the user device, the at least one precoding configuration indicating a phase precoding vector associated with a transmission layer. The phase precoding vector associated with the transmission layer may be determined based on the coherence capability across the plurality of antenna ports.

Certain exemplary embodiments may provide that the method further includes receiving, from the user device, an uplink transmission based on the at least one precoding configuration. The method may also include determining a channel matrix based on at least one sounding reference signal received from the user device. The at least one precoding configuration may be at least based on the determined channel matrix. The method may include determining a port-to-port channel matrix based on the at least one antenna port power imbalance vector received from the user device. The at least one precoding configuration may be based at least on the determined port-to-port channel matrix.

Some exemplary embodiments may provide that the at least one antenna port power imbalance vector is associated with the transmission layer. The antenna port power imbalance vector may comprise an indication of a power imbalance per antenna port for the transmission layer. The coherence capability across the plurality of antenna ports may be determined at least based on a power level between the plurality of antenna ports associated with the transmission layer being below a threshold. The threshold may be based on a channel quality value. The precoding configuration indicating the phase precoding vector may comprise at least a relative phase value for at least one pair of antenna ports of the plurality of antenna ports. The at least one antenna port power imbalance vector may be received as part of uplink control information, a medium access control element, or a radio resource control configuration message. The at least one precoding configuration may be transmitted as part of downlink control information, a medium access control element, or a radio resource control configuration message. The transmission layer may comprise a plurality of transmission layers, and the plurality of transmission layers are each associated with at least one antenna port power imbalance vector.

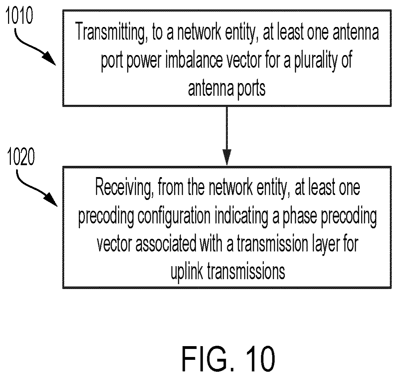

FIG. 10 illustrates an example flow diagram of a method, according to certain exemplary embodiments. In an example embodiment, the method of FIG. 10 may be performed by a user device in a 3GPP system, such as LTE, 5G-NR, or 6G. For instance, in an exemplary embodiment, the method of FIG. 10 may be performed by a user device or user equipment, such as a UE, similar to apparatus 1210 illustrated in FIG. 12.

According to various exemplary embodiments, the method of FIG. 10 may include, at 1010, transmitting, to a network entity, at least one antenna port power imbalance vector for a plurality of antenna ports. At 1020, the method may include receiving, from the network entity, at least one precoding configuration indicating a phase precoding vector associated with a transmission layer for uplink transmissions.

Certain exemplary embodiments may provide that the method also includes obtaining the at least one antenna port power imbalance vector for the plurality of antenna ports and/or obtaining the at least one antenna port power imbalance vector associated with a coherence capability across the plurality of antenna ports. The method may include performing an uplink transmission to the network entity based on the at least one precoding configuration. The at least one antenna port power imbalance vector may be associated with the transmission layer. The at least one antenna port power imbalance vector may be based on at least a power level imbalance value.

Some exemplary embodiments may provide that the power imbalance value may be determined based on downlink reference signals received from the network entity. The method may also include determining a target antenna port power level based on the power imbalance value. The coherence capability across the plurality of antenna ports may be determined based on at least one of a power level imbalance between antenna ports associated with one transmission layer being lower than a threshold for coherence, or a power level compensation for coherence being below a threshold to obtain power balance. The threshold for coherence may be based on a channel quality value. The precoding configuration indicating the phase precoding vector may comprise at least a relative phase value for at least one pair of antenna ports of the plurality of antenna ports.

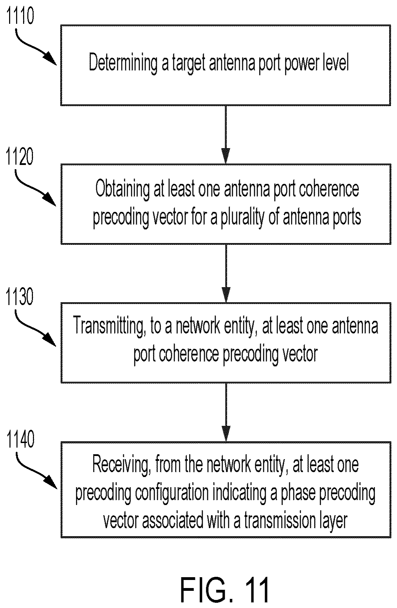

FIG. 11 illustrates an example flow diagram of a method, according to certain exemplary embodiments. In an example embodiment, the method of FIG. 11 may be performed by a user device in a 3GPP system, such as LTE, 5G-NR, or 6G. For instance, in an exemplary embodiment, the method of FIG. 11 may be performed by a user device or user equipment, such as a UE, similar to apparatus 1210 illustrated in FIG. 12.

According to various exemplary embodiments, the method of FIG. 11 may include, at 1110, determining a target antenna port power level, and at 1120, obtaining at least one antenna port coherence precoding vector for a plurality of antenna ports. The at least one antenna port coherence precoding vector may be based on the determined target antenna port power level. At 1130, the method may include transmitting, to a network entity, at least one antenna port coherence precoding vector. The at least one antenna port coherence precoding vector may comprise a coherence capability across a plurality of antenna ports. At 1140, the method may include receiving, from the network entity, at least one precoding configuration indicating a phase precoding vector associated with a transmission layer. The phase precoding vector associated with the transmission layer may be based on the at least one antenna port coherence precoding vector.

Certain exemplary embodiments may provide that the method further includes determining the target antenna port power level based on a power level imbalance between the plurality of antenna ports. The power level imbalance of the plurality of antenna ports may be obtained based on downlink reference signals received from the network entity. The method may also include determining the coherence capability across the plurality of antenna ports based on the at least one antenna port coherence precoding vector. The method may include determining a required increase in the power level for each of the plurality of antenna ports and obtaining a coherence of the plurality of antenna ports based on the determined target antenna port power level.

Some exemplary embodiments may provide that the method includes, when the required power level exceeds a power threshold for at least one antenna port of the plurality of antenna ports, determining that compensation for the determined target antenna port power level is not desired for the at least one antenna port, and setting a value of the at least one antenna port to be zero in the at least one antenna port coherence precoding vector. The method may include determining a compensation amount of additional power required to compensate for the determined target antenna port power level for at least one antenna port of the plurality of antenna ports to be coherent, and in response to determining that the compensation amount is desirable, setting a value of the at least one antenna port in the at least one antenna port coherence precoding vector. The method may include determining a compensation amount of additional power required to compensate for the determined target antenna port power level for at least one antenna port of the plurality of antenna ports to be coherent, and in response to determining that the compensation amount exceeds a maximum threshold, setting a value of the at least one antenna port to be zero in the at least one antenna port coherence precoding vector.

FIG. 12 illustrates apparatuses 1210 and 1220 according to various exemplary embodiments. In the various exemplary embodiments, the apparatus 1210 may be an element in a network or associated with such a network, such as mobile device, user device, or other type of user equipment. UEs 401/501 may be examples of apparatus 1210 according to various exemplary embodiments as discussed above. It should be noted that one of ordinary skill in the art would understand that apparatus 1210 may include components or features not shown in FIG. 12. Further, apparatus 1220 may be an element in a network or associated with such a network, such as a base station, gNB, and the like. gNBs 402/502 may be examples of apparatus 1220 according to various exemplary embodiments as discussed above. It should be noted that one of ordinary skill in the art would understand that apparatus 1220 may include components or features not shown in FIG. 12.

According to various exemplary embodiments, the apparatuses 1210 and/or 1220 may include one or more processors, one or more computer-readable storage medium (for example, memory, storage, or the like), one or more radio access components (for example, a modem, a transceiver, or the like), and/or a user interface. In some exemplary embodiments, apparatuses 1210 and/or 1220 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 12, apparatuses 1210 and/or 1220 may include or be coupled to processors 1212 and 1222, respectively, for processing information and executing instructions or operations. Processors 1212 and 1222 may be any type of general or specific purpose processor. In fact, processors 1212 and 1222 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 1212 (1222) for each of apparatuses 1210 and/or 1220 is shown in FIG. 12, multiple processors may be utilized according to other example embodiments. For example, it should be understood that, in certain exemplary embodiments, apparatuses 1210 and/or 1220 may include two or more processors that may form a multiprocessor system (for example, in this case processors 1212 and 1222 may represent a multiprocessor) that may support multiprocessing. According to certain exemplary embodiments, the multiprocessor system may be tightly coupled or loosely coupled to, for example, form a computer cluster).

Processors 1212 and 1222 may perform functions associated with the operation of apparatuses 1210 and/or 1220, respectively, including, as some examples, precoding of antenna gain/phase parameters, encoding and decoding of individual bits forming a communication message, formatting of information, and overall control of the apparatuses 1210 and/or 1220, including processes illustrated in FIGs. 4-11.

Apparatuses 1210 and/or 1220 may further include or be coupled to memory 1214 and/or 1224 (internal or external), respectively, which may be coupled to processors 1212 and 1222, respectively, for storing information and instructions that may be executed by processors 1212 and 1222. Memory 1214 (memory 1224) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 1214 (memory 1224) can be comprised of any combination of random access memory (RAM), read only memory (ROM), static storage such as a magnetic or optical disk, hard disk drive (HDD), or any other type of non-transitory machine or computer readable media. The instructions stored in memory 1214 and memory 1224 may include program instructions or computer program code that, when executed by processors 1212 and 1222, enable the apparatuses 1210 and/or 1220 to perform tasks as described herein.

In certain exemplary embodiments, apparatuses 1210 and/or 1220 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 1212 and 1222 and/or apparatuses 1210 and/or 1220 to perform any of the methods illustrated in FIGs. 4-11.

In some exemplary embodiments, apparatuses 1210 and/or 1220 may also include or be coupled to one or more antennas 1215 and 1225, respectively, for receiving a downlink signal and for transmitting via an uplink from apparatuses 1210 and/or 1220. Apparatuses 1210 and/or 1220 may further include transceivers 1216 and 1226, respectively, configured to transmit and receive information. The transceivers 1216 and 1226 may also include a radio interface (for example, a modem) respectively coupled to the antennas 1215 and 1225. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 1216 and 1226 may be respectively configured to modulate information on to a carrier waveform for transmission by the antenna(s) 1215 and 1225, and demodulate information received via the antenna(s) 1215 and 1225 for further processing by other elements of apparatuses 1210 and/or 1220. In other exemplary embodiments, transceivers 1216 and 1226 may be capable of transmitting and receiving signals or data directly. Additionally or alternatively, in some exemplary embodiments, apparatuses 1210 and/or 1220 may include an input and/or output device (I/O device). In certain exemplary embodiments, apparatuses 1210 and/or 1220 may further include a user interface, such as a graphical user interface or touchscreen.

In certain exemplary embodiments, memory 1214 and memory 1224 store software modules that provide functionality when executed by processors 1212 and 1222, respectively. The modules may include, for example, an operating system that provides operating system functionality for apparatuses 1210 and/or 1220. The memory may also store one or more functional modules, such as an application or program, to provide additional functionality for apparatuses 1210 and/or 1220. The components of apparatuses 1210 and/or 1220 may be implemented in hardware, or as any suitable combination of hardware and software. According to certain exemplary embodiments, apparatus 1210 may optionally be configured to communicate with apparatus 1220 via a wireless or wired communications link 1230 according to any radio access technology, such as NR.

According to certain exemplary embodiments, processors 1212 and 1222, and memory 1214 and 1224 may be included in or may form a part of processing circuitry or control circuitry. In addition, in some exemplary embodiments, transceivers 1216 and 1226 may be included in or may form a part of transceiving circuitry.

For instance, in certain exemplary embodiments, the apparatus 1210 may be controlled by the memory 1214 and the processor 1212 to transmit, to a network entity, at least one antenna port coherence precoding vector. The at least one antenna port coherence precoding vector may comprise a coherence capability across a plurality of antenna ports. The apparatus 1210 may also be controlled to receive, from the network entity, at least one precoding configuration indicating a phase precoding vector associated with a transmission layer. The phase precoding vector associated with the transmission layer may be based on the at least one antenna port coherence precoding vector.

In various exemplary embodiments, the apparatus 1220 may be controlled by the memory 1224 and the processor 1222 to receive, from a user device, at least one antenna port coherence precoding vector comprising an indication of a coherence capability across a plurality of antenna port. The apparatus 1220 may also be controlled to transmit, to the user device, at least one precoding configuration indicating a phase precoding vector associated with a transmission layer. The phase precoding vector associated with the transmission layer may be determined based on the at least one antenna port coherence precoding vector.

In some additional exemplary embodiments, the apparatus 1210 may be controlled by the memory 1214 and the processor 1212 to transmit, to a network entity, at least one antenna port power imbalance vector for a plurality of antenna ports and receive, from the network entity, at least one precoding configuration indicating a phase precoding vector associated with a transmission layer for uplink transmissions.

In certain additional exemplary embodiments, the apparatus 1220 may be controlled by the memory 1224 and the processor 1222 to receive, from a user device, at least one antenna port power imbalance vector and determine a coherence capability across a plurality of antenna ports based on the at least one antenna port power imbalance vector. The apparatus 1220 may also be controlled to transmit, to the user device, at least one precoding configuration indicating a phase precoding vector associated with a transmission layer. The phase precoding vector associated with the transmission layer may be determined based on the coherence capability across the plurality of antenna ports.

In various other exemplary embodiments, the apparatus 1210 may be controlled by the memory 1214 and the processor 1212 to determine a target antenna port power level and obtain at least one antenna port coherence precoding vector for a plurality of antenna ports. The at least one antenna port coherence precoding vector may be based on the determined target antenna port power level. The apparatus 1210 may also be controlled to transmit, to a network entity, at least one antenna port coherence precoding vector. The at least one antenna port coherence precoding vector may comprise a coherence capability across a plurality of antenna ports. The apparatus 1210 may further be controlled to receive, from the network entity, at least one precoding configuration indicating a phase precoding vector associated with a transmission layer. The phase precoding vector associated with the transmission layer may be based on the at least one antenna port coherence precoding vector.

In some exemplary embodiments, an apparatus (e.g., apparatus 1210 and/or apparatus 1220) may include means for performing a method, a process, or any of the variants discussed herein. Examples of the means may include one or more processors, memory, controllers, transmitters, receivers, and/or computer program code for causing the performance of the operations.

In various exemplary embodiments, the apparatus 1210 may include means for transmitting, to a network entity, at least one antenna port coherence precoding vector. The at least one antenna port coherence precoding vector may comprise a coherence capability across a plurality of antenna ports. The apparatus 1210 may also include means for receiving, from the network entity, at least one precoding configuration indicating a phase precoding vector associated with a transmission layer. The phase precoding vector associated with the transmission layer may be based on the at least one antenna port coherence precoding vector.

In some exemplary embodiments, the apparatus 1220 may include means for receiving, from a user device, at least one antenna port coherence precoding vector comprising an indication of a coherence capability across a plurality of antenna ports. The apparatus 1220 may also include means for transmitting, to the user device, at least one precoding configuration indicating a phase precoding vector associated with a transmission layer. The phase precoding vector associated with the transmission layer may be determined based on the at least one antenna port coherence precoding vector.

In certain additional exemplary embodiments, the apparatus 1210 may include means for transmitting, to a network entity, at least one antenna port power imbalance vector for a plurality of antenna ports and means for receiving, from the network entity, at least one precoding configuration indicating a phase precoding vector associated with a transmission layer for uplink transmissions.

In some additional exemplary embodiments, the apparatus 1220 may include means for receiving, from a user device, at least one antenna port power imbalance vector and means for determining a coherence capability across a plurality of antenna ports based on the at least one antenna port power imbalance. The apparatus 1220 may also include means for transmitting, to the user device, the at least one precoding configuration indicating a phase precoding vector associated with a transmission layer. The phase precoding vector associated with the transmission layer may be determined based on the coherence capability across the plurality of antenna ports.

In various other exemplary embodiments, the apparatus 1210 may include means for determining a target antenna port power level and means for obtaining at least one antenna port coherence precoding vector for a plurality of antenna ports. The at least one antenna port coherence precoding vector may be based on the determined target antenna port power level. The apparatus 1210 may also include means for transmitting, to a network entity, at least one antenna port coherence precoding vector. The at least one antenna port coherence precoding vector may comprise a coherence capability across a plurality of antenna ports. The apparatus 1210 may further include means for receiving, from the network entity, at least one precoding configuration indicating a phase precoding vector associated with a transmission layer. The phase precoding vector associated with the transmission layer may be based on the at least one antenna port coherence precoding vector.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 1210 and/or 1220) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some exemplary embodiments. The one or more computer-executable components may be at least one software code or portions of it. Modifications and configurations required for implementing functionality of certain exemplary embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other exemplary embodiments, the functionality may be performed by hardware or circuitry included in an apparatus (for example, apparatuses 1210 and/or 1220), for example through the use of an application specific integrated circuit (ASIC), a programmable gate array (PGA), a field programmable gate array (FPGA), or any other combination of hardware and software. In yet another exemplary embodiment, the functionality may be implemented as a signal, a non-tangible means that can be carried by an electromagnetic signal downloaded from the Internet or other network.

According to certain exemplary embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of exemplary embodiments described throughout this specification may be combined in any suitable manner in one or more exemplary embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more exemplary embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these exemplary embodiments, it would be apparent to those of skill in the art that certain modifications, variations, and alternative constructions would be apparent, while remaining within the spirit and scope of exemplary embodiments. Although the above embodiments refer to 5G NR and LTE technology, the above embodiments may also apply to any other present or future 3GPP technology, such as LTE-advanced, and/or fourth generation (4G) and/or sixth (6G) technology.

### Partial Glossary:

- 3GPP: 3rd Generation Partnership Project
- 5G: 5th Generation
- AP: Antenna Port
- APCv: Antenna Port Coherence Vector
- CSI: Channel State Information
- CSI-RS: Channel State Information Reference Signal
- DCI: Downlink Control Information
- DL: Downlink
- EIRP: Equivalent Isotropic Radiated Power
- EMBB: Enhanced Mobile Broadband
- gNB: 5G or Next Generation NodeB
- LTE: Long Term Evolution
- MIMO: Multiple Input Multiple Output
- NR: New Radio
- PA: Power Amplifier
- PMI: Precoding Matrix Indicator
- PUCCH: Physical Uplink Control Channel
- PUSCH: Physical Uplink Shared Channel
- RF: Radio Frequency
- RPPCv: Relative Phase Pre-Coding Vector
- SRS: Sounding Reference Signal
- TAPPL: Target Antenna Port Power Level
- TPMI: Transmitted Precoding Matrix Indicator
- Tx: Transmit
- UCI: Uplink Control Information
- UE: User Equipment
- UL: Uplink

## Claims

1. An apparatus (401, 501, 1210) comprising:
at least one processor (1212); and
at least one memory (1214) storing instructions that, when executed by the at least one processor (1212), cause the apparatus (401, 501, 1210) at least to:
determine (1110) a target antenna port power level;
obtain (1120) at least one antenna port coherence precoding vector for a plurality of antenna ports, wherein the at least one antenna port coherence precoding vector is based on the determined target antenna port power level;
transmit (1130), to a network entity (402, 502, 1220), at least one antenna port coherence precoding vector, wherein the at least one antenna port coherence precoding vector comprises a coherence capability across a plurality of antenna ports; and
receive (1140), from the network entity (402, 502, 1220), at least one precoding configuration indicating a phase precoding vector associated with a transmission layer, wherein the phase precoding vector associated with the transmission layer is based on the at least one antenna port coherence precoding vector.

2. The apparatus (401, 501, 1210) according to claim 1, wherein the stored instructions, when executed by the at least one processor (1212), further cause the apparatus (401, 501, 1210) at least to:
determine the target antenna port power level based on a power level imbalance between the plurality of antenna ports, wherein the power level imbalance of the plurality of antenna ports are obtained based on downlink reference signals received from the network entity.

3. The apparatus (401, 501, 1210) according to claim 1 or claim 2, wherein the stored instructions, when executed by the at least one processor (1212), further cause the apparatus (401, 501, 1210) at least to:
determine the coherence capability across the plurality of antenna ports based on the at least one antenna port coherence precoding vector.

4. The apparatus (401, 501, 1210) according to any one of claims 1-3, wherein the stored instructions, when executed by the at least one processor (1212), further cause the apparatus (401, 501, 1210) at least to:
determine a required increase in the power level for each of the plurality of antenna ports and obtain a coherence of the plurality of antenna ports based on the determined target antenna port power level .

5. The apparatus (401, 501, 1210) according to claim 4, wherein the stored instructions, when executed by the at least one processor (1212), further cause the apparatus (401, 501, 1210) at least to:
when the required power level exceeds a power threshold for at least one antenna port of the plurality of antenna ports, determine that compensation for the determined target antenna port power level is not desired for the at least one antenna port, and set a value of the at least one antenna port to be zero in the at least one antenna port coherence precoding vector; or
determine a compensation amount of additional power required to compensate for the determined target antenna port power level for at least one antenna port of the plurality of antenna ports to be coherent, and in response to determining that the compensation amount is desirable, set a value of the at least one antenna port in the at least one antenna port coherence precoding vector; or
determine a compensation amount of additional power required to compensate for the determined target antenna port power level for at least one antenna port of the plurality of antenna ports to be coherent, and in response to determining that the compensation amount exceeds a maximum threshold, set a value of the at least one antenna port to be zero in the at least one antenna port coherence precoding vector.

6. The apparatus (401, 501, 1210) according to any one of claims 1-5, wherein the stored instructions, when executed by the at least one processor, further cause the apparatus (401, 501, 1210) at least to:
perform an uplink transmission to the network entity based on the at least one precoding configuration.

7. The apparatus (401, 501, 1210) according to any one of claims 1-6, wherein the coherence capability across the plurality of antenna ports is determined based on at least one of:
a power level imbalance between antenna ports associated with one transmission layer being lower than a threshold for coherence, or
a power level compensation for coherence being below a threshold to obtain power balance.

8. The apparatus (401, 501, 1210) according to any one of claims 1-7, wherein the precoding configuration indicating the phase precoding vector comprises at least a relative phase value for at least one pair of antenna ports of the plurality of antenna ports.

9. The apparatus (401, 501, 1210) according to any one of claims 1-8, wherein the at least one antenna port coherence precoding vector is transmitted as part of uplink control information, a medium access control element, or a radio resource control configuration message.

10. The apparatus (401, 501, 1210) according to any one of claims 1-9, wherein the at least one precoding configuration is received as part of downlink control information, a medium access control element, or a radio resource control configuration message.

11. A method implemented by an apparatus (401, 501, 1210) and comprising:
determining (1110) a target antenna port power level;
obtaining (1120) at least one antenna port coherence precoding vector for a plurality of antenna ports, wherein the at least one antenna port coherence precoding vector is based on the determined target antenna port power level;
transmitting (1130), to a network entity (402, 502, 1220), at least one antenna port coherence precoding vector, wherein the at least one antenna port coherence precoding vector comprises a coherence capability across a plurality of antenna ports; and
receiving (1140), from the network entity (402, 502, 1220), at least one precoding configuration indicating a phase precoding vector associated with a transmission layer, wherein the phase precoding vector associated with the transmission layer is based on the at least one antenna port coherence precoding vector.

12. The method according to claim 11, further comprising:
determining the target antenna port power level based on a power level imbalance between the plurality of antenna ports, wherein the power level imbalance of the plurality of antenna ports are obtained based on downlink reference signals received from the network entity (402, 502, 1220).

13. The method according to claim 11 or claim 12, further comprising:
determining the coherence capability across the plurality of antenna ports based on the at least one antenna port coherence precoding vector.

14. The method according to any one of claims 11-13, further comprising:
determining a required increase in the power level for each of the plurality of antenna ports and obtaining a coherence of the plurality of antenna ports based on the determined target antenna port power level.

15. The method according to claim 14, further comprising:
when the required power level exceeds a power threshold for at least one antenna port of the plurality of antenna ports, determining that compensation for the determined target antenna port power level is not desired for the at least one antenna port, and setting a value of the at least one antenna port to be zero in the at least one antenna port coherence precoding vector; or
determining a compensation amount of additional power required to compensate for the determined target antenna port power level for at least one antenna port of the plurality of antenna ports to be coherent, and in response to determining that the compensation amount is desirable, setting a value of the at least one antenna port in the at least one antenna port coherence precoding vector; or
determining a compensation amount of additional power required to compensate for the determined target antenna port power level for at least one antenna port of the plurality of antenna ports to be coherent, and in response to determining that the compensation amount exceeds a maximum threshold, setting a value of the at least one antenna port to be zero in the at least one antenna port coherence precoding vector.
